# EUROPÄISCHE PATENTSCHRIFT

(11) **EP 0 406 876 B1**
(45) Veröffentlichungstag und Bekanntmachung des Hinweises auf die Patenterteilung: **26.04.1995**
(21) Anmeldenummer: 90112897.5
(22) Anmeldetag: 06.07.1990
(51) Int. Cl.: F16L 55/165, F16L 55/16

(54) **Vorrichtung zur Sanierung von Abflussrohren mit einem verharzten Innenrohr**
Device for the renovation of sewer pipes with an inner pipe coated with a resin
Dispositif pour la restauration de tuyaux d'écoulement avec un tube interne recouvert de résine

(30) Priorität: 07.07.1989 DE 3922351
(43) Veröffentlichungstag der Anmeldung: 09.01.1991
(73) Patentinhaber: JT- ELEKTRONIK GMBH, D-88131 Lindau/B (DE)
(72) Erfinder: Jöckel, Ulrich, Dipl.-Ing.(FH), D-8990 Lindau/B. (DE)
(74) Vertreter: Riebling, Peter, Dr.-Ing.

(56) Entgegenhaltungen:
- EP-A- 0 122 246
- EP-A- 0 228 998
- WO-A-89/03003
- GB-A- 2 074 691

## Beschreibung

Die Erfindung betrifft eine Vorrichtung zum Sanieren von Abflußrohren mit einem Rohr aus biegsamen Material, das mit einem aushärtbaren Harz getränkt ist und das gewickelt und mit einer Überlappung des Rohrmaterials in ein zu sanierendes Abflußrohr eingeführt werden kann und in dem sich eine Blase befindet, die aufgeblasen werden kann, so daß das Rohr seinen Durchmesser unter Verkleinerung der Überlappung vergrößert, bis es an der Innenwand des Abflußrohres anliegt, sowie mit einer Einrichtung zum Aushärten des Harzes.

Eine Vorrichtung mit diesen Merkmalen ist in der GB-A-2 074 691 beschrieben. Diese bekannte Vorrichtung ist nicht verfahrbar. Das Harz wird dort mit Hilfe von Heißwasser ausgehärtet, welches ausreichend nahe an das auszuhärtende Harz gebracht werden muß.

Die EP-A-0 228 998 beschreibt eine ähnliche Vorrichtung mit einem dreilagigen Schlauch, bestehend aus einer Innenlage und einer Außenlage, von denen wenigstens eine strahlendurchlässig und wenigstens eine gasdicht ist. Außerdem ist eine Zwischenlage vorgesehen, die mit einem Harz imprägniert ist, welches mit Hilfe von ultraviolettem Licht ausgehärtet werden kann. Im Inneren des Schlauches wird dann eine UV-Strahlung erzeugt, wodurch das Harz aushärtet. Hierzu sind entsprechende Lampen an einem fahrbaren Gestell vorgesehen, welches vor dem Aushärten in dem aufgeblasenen Schlauch eingefahren wird.

Der Erfindung liegt die Aufgabe zugrunde, eine Vorrichtung zum Sanieren von Abflußrohren mit den eingangs genannten Merkmalen vorzuschlagen, die sich insbesondere durch eine hohe Betriebssicherheit auszeichnet.

Zur Lösung dieser Aufgabe ist die Erfindung dadurch gekennzeichnet, daß an den Stirnseiten des Rohres Fahr- und Antriebseinheiten vorgesehen sind, die mittels Haltestutzen die lichtdurchlässige, wenigstens aber UV-lichtdurchlässige Blase und eine axial durch das Rohr und die Blase hindurch gehende Stange tragen, die die Einrichtung zum Aushärten des Harzes trägt, die als Wärmestrahler oder Lampen ausgebildet sind.

Mit der gegebenen technischen Lehre werden wesentliche Vorteile gegenüber dem Stand der Technik erzielt.

Zunächst wird kein fertig im Durchmesser festgelegter Schlauch verarbeitet, sondern ein Wickelrohr, welches aus dem zusammengeschobenen oder gewickelten plattenförmigen Mterial besteht. Dieses Wickelrohr hat also im Scheitelbereich großflächige Überlappungsbereiche, wo die Enden des Rohres sich gegenseitig unter Flächenberührung berühren.

Damit ist es nun möglich, ein derartiges Wickelrohr zusammengeschoben oder mit verringertem Durchmesser in den Kanal einzufahren und erst wenn es an Ort und Stelle im Bereich der zu sanierenden Muffe oder Schadstelle ist, wird die im Wickelrohr angeordnete Blase mit Luft oder Wasser gefüllt, wodurch das Wickelrohr sich ausdehnt und die Überlappungsbereiche sich so verschieben, daß das Wickelrohr im Durchmesser stetig zunimmt, bis es unter Druck der innenseitigen Blase sich formschlüssig an der Innenseite des Kanalrohres anlegt.

Hierzu wird noch angemerkt, daß das Wickelrohr beim Einfahren in den Kanal von einem oder mehreren Gummibändern, Schnüre oder Federn an seinem Außenumfng umfaßt ist, wobei die Federn, Schnüre oder Gummibänder so ausgebildet sind, daß sie sich zusammen mit dem Wickelrohr radial ausdehnen und im Umfang zunehmen, bis das Wickelrohr formschlüssig an der Innenseite des zu sanierenden Kanalabschnitts zusammen mit dem Gummiband oder der Feder anlegt.

Die umschließenden Bänder oder Federn dienen also nur dazu, ein vorzeitiges unbeabsichtigtes Verschieben und Öffnen des Wickelrohres zu vermeiden.

Ferner wird angemerkt, daß das Wickelrohr nicht nur in sich geharzt ist, sondern daß auch der Außenumfang des Wickelrohres mit einer entsprechenden Harzbeschichtung versehen ist, um bei der Anlage an der Kanalinnenwandung eine Bindung mit dem Harz am Außenumfang des Rohres zu erreichen. Damit verklebt sich das Wickelrohr mit der Kanalinnenwandung, und es ist eine kraft- und formschlüssige Anlage gegeben.

Es wird hierbei bevorzugt, wenn der Überlappungsbereich des Innenrohres im Scheitelbereich (d.h. also vertikal oben) ist, weil dadurch das Wickelrohr eine größere Stabilität erhält und man erhält durch diesen überlappten Bereich eine stärker dimensionierte Fläche, die hohen statischen Drücken aussetzbar ist.

Bei dieser Ausführungsform ist vorgesehen, daß die Wickelenden sich symmetrisch zum Scheitelbereich überlappen und daß demzufolge die Überlappungskante parallel zur Rohrlängsachse verläuft.

In einer zweiten Ausführungsform, die ebenfalls von der vorliegenden Erfindung umfaßt wird, ist hingegen vorgesehen, daß sich die Wickelenden und damit auch die Überlappungskante spiralig über die Länge des Wickelrohres erstrecken.

Auch ein derartig spiralig gewickeltes Rohr kann sich entsprechend der technischen Lehre der vorliegenden Erfindung radial in seinem Durchmesser erweitern, wobei die spiralig sich einander übergreifenden Überlappungsbereiche sich bei der radialen Ausdehnung in Umfangsrichtung gegeneinander verschieben.

Beide Ausführungsformen können extrem hohen statischen Drücken standhalten.

In Extremfällen kann es sogar gefordert werden, daß noch größere statische Drücke von dem Innenrohr aufgefangen werden sollten und es ist dann vorgesehen, daß nach der Anbringung eines Wickelrohres noch ein zweites, innenseitiges Wickelrohr angebracht wird. Es handelt sich also dann um eine doppelwandige Ausführung.

Wesentlicher Vorteil der vorliegenden Erfindung ist, daß mit einem erfindungsgemässen Wickelrohr keine Standarddurchmesser mehr auf Lager gehalten werden müssen, sondern daß ein derartiges Wickelrohr für einen großen Durchmesserbereich von zu sanierenden Kanalrohren verwendet werden kann. Ein solcher Durchmesserbereich ist z.B. der Bereich von 70 mm bis 1000 mm. Das heißt, für die Sanierung derartiger Kanäle in diesen Durchmesserbereichen reicht ein einziges Wickelrohr aus, welches die vorher beschriebenen überlappenden Bereiche aufweist.

Das Wickelrohr muß selbstverständlich die entsprechende Länge haben, um den Kanalabschnitt an der geforderten Stelle auch über die gesamte Länge abzudichten.

Hierbei ist stets vorgesehen, daß die axiale Länge des Wickelrohres den schadhaften Kanalabschnitt um eine angemessene Länge überdeckt.

Beim Einfahren in das Kanalrohr ist das Wickelrohr radial zusammengefahren und es findet ein Überlappungsbereich von etwa 120° statt. Diese Angabe ist nur beispielhaft und kann selbstverständlich in großen Bereichen variieren.

Beim Auseinanderfahren des Wickelrohres, wenn es seinen endgültigen radialen Durchmesser einnimmt, wird ein Überlappungsbereich von 90° bevorzugt.

Hierdurch wird gewährleistet, daß die sich überlappenden Abschnitte noch großflächig aneinander anliegen und gegeneinander abdichten und im übrigen eine große statische Stabilität im Scheitelbereich erreicht wird.

Im Prinzip ist also das Wickelrohr spiralig gewickelt, d.h. das äußere Ende ist im Querschnitt spiralig auf das innere Ende draufgewickelt, so daß hierdurch eine große Anzahl von Durchmesser von zu sanierenden Kanalrohren beherrscht werden können.

Die Verarbeitung des Wickelrohres erfolgt nun folgendermaßen:

Nächst des zu sanierenden Kanalabschnitts wird der Schacht geöffnet und die gesamte Verarbeitungseinheit wird eingefahren.

Die Verarbeitungseinheit besteht aus einem vorderen Fahrwagen und aus einem hinteren Antriebswagen, wobei die beiden Wagen zwischen sich die Blase und das auf der Blase angeordnete Wickelrohr aufnehmen. Die Blase ist hierbei nur wenig oder garnicht mit Luft gefüllt.

In der Blase ist auch die Aushärteinheit angeordnet, die entweder aus einer Wärmeeinheit oder aus einer Lichteinheit je nach Art des verwendeten Harzes bestehen kann.

Das Harz des Rohres ist dementsprechend wärmehärtbar oder lichthärtbar.

Auf dem hinteren Antriebswagen ist noch eine Kamera montiert, mit der das Einfahren der gesamten Einheit im Kanal beobachtet werden kann und mit der dann die genaue Positionierung des Wickelrohres in dem beschädigten Kanalabschnitt vorgenommen wird.

Über die Kabel- und Zuführschläuche am hinteren Antriebswagen wird nun die Blase aufgeblasen, wobei ein beliebiger Druck von z.B. 2 oder 3 bar erreicht wird. Durch das Aufblasen der Blase weitet sie sich radial aus und nimmt gleichzeitig das daraufliegende Wickelrohr mit, so daß sich das Wickelrohr radial ausdehnt und die Überlappungsbereiche sich in Umfangsrichtung gegeneinander verschieben. Dieses Verschieben erfolgt solange, bis das Wickelrohr am Innenumfang des zu sanierenden Kanalabschnitts formschlüssig anliegt.

Bei unter Druck stehender Blase, d.h. also wenn das Rohr unter dem Druck der Blase gegen die Kanalinnenwandung gepresst wird, wird nun die Wärme- oder Lichteinheit in Betrieb genommen.

Bei einer Lichteinheit sind hierbei in der Blase eine Reihe von UV-Strahlern angeordnet, die ringsum radial die Innenseite der Blase anstrahlen. Die Blase ist hierbei bevorzugt lichtdurchlässig, wenigstens jedoch UV-lichtdurchlässig. Das Licht geht also durch die Blase hindurch und trifft auf die Innenwandung des Wickelrohres auf, wo es in das Harz des Wickelrohres eindringt und dieses Harz aushärtet.

Danach - nach einer gewissen Aushärtungszeit - wird die Blase entleert und die gesamte Fahreinheit - bestehend aus dem vorderen und dem hinteren Antriebswagen zusammen mit der entleerten Blase - wird aus dem Kanal wieder herausgefahren.

Im Falle, daß ein wärmeaushärtbares Harz verwendet wird, wird statt der Strahleranordnung eine Wärmeanordnung angeordnet. Diese Wärmeanordnung kann z. B. aus Wärmestrahlern bestehen.

Eine Ausführungsform der vorliegenden Erfindung wird anhand der Zeichnungen näher beschrieben.

Es zeigen:
- Figur 1:: eine Platte vor ihrer Verarbeitung zu einem Wickelrohr;
- Figur 2:: ein Wickelrohr im eingewickelten Zustand;
- Figur 3:: ein Gummiband oder eine Flachfeder zur Umspannung des Wickelrohres;
- Figur 4:: schematisiert eine Vorrichtung zur Verarbeitung des Wickelrohres;
- Figur 5:: schematisiert einen Schnitt durch das Wickelrohr ohne Darstellung der Blase;
- Figur 6:: schematisiert die zweite Ausführungsform eines Wickelrohres nach den Figuren 2 oder 6 verarbeitet wird.

Die geharzte Platte 1 besteht im wesentlichen aus einem Glasfasergewebe, welches in an sich bekannter Weise mit wärme- oder lichthärtbaren Harz getränkt ist.

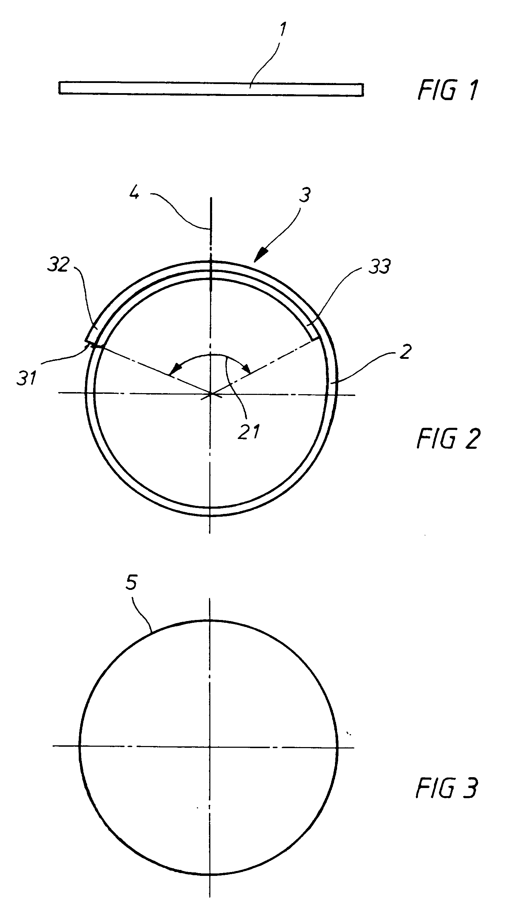

Zur Herstellung eines Innenrohres wird nach der erstbeschriebenen Ausführungsform gemäß Figur 2 ein Wickelrohr 2 dadurch hergestellt, daß die Platte 1 mit ihren beiden Wickelenden 32, 33 gegeneinander gerichtet zu einem Rohr geformt wird, wobei sich die Wickelenden 32, 33 im Überlappungsbereich 3 überlappen.

Es wird hierbei bevorzugt, wenn der Überlappungsbereich 3 symmetrisch zum Scheitel 4 liegt, weil damit das so hergestellte Wickelrohr im ausgehärteten Zustand auch hohen statischen Beanspruchungen standhält.

Die Wickelenden 32, 33 bilden hierbei einen Überlappungsbereich 21 mit einem Winkel von z. B. 120°.

Sobald das Wickelrohr dann am Ort seines Einsatzes radial ausgedehnt wird, verschieben sich die Wickelenden 32, 33 entlang einer Umfangslinie gegeneinander, wodurch sich dann der Überlappungsbereich 21 vermindert und einen Winkel von etwa 90° einnimmt.

Die Figur 3 zeigt, daß das Wickelrohr 2 im zusammengefahrenen, im Durchmesser verminderten Zustand von einem Spannband 4 umgeben werden kann.

Je nach Länge des Wickelrohres können auch mehrere Spannbänder gleichmäßig über die Länge des Wickelrohres verteilt angeordnet werden.

Das Spannband 5 besteht hierbei aus einem Gummiband, oder aus einem Flachfederband, Schnur oder Angelleine.

Wichtig bei der Ausführungsform nach Figur 2 ist, daß der Überlappungsbereich 3 des Wickelrohres 2 so gebildet ist, daß sich die Überlappungskante 31 parallel zur Längsachse des Rohres erstreckt. Das heißt, die Wickelenden 32, 33 sind übereinander geschlagen, verlaufen jedoch ihrerseits nicht spiralig um den Rohrumfang herum.

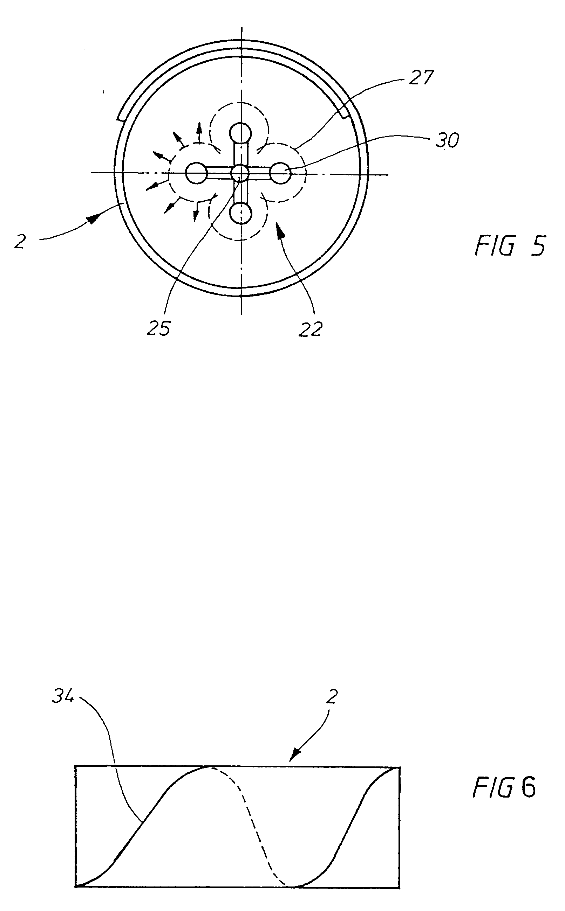

Eine andere Ausführungform zeigt hingegen die Figur 6.

Das dort dargestellte Wickelrohr 2 zeigt, daß die Überlappungskante 34 spiralig über die Länge des Wickelrohres 2 verläuft, so daß also auch der Überlappungsbereich 3 einer dementsprechenden Spirallinie folgt.

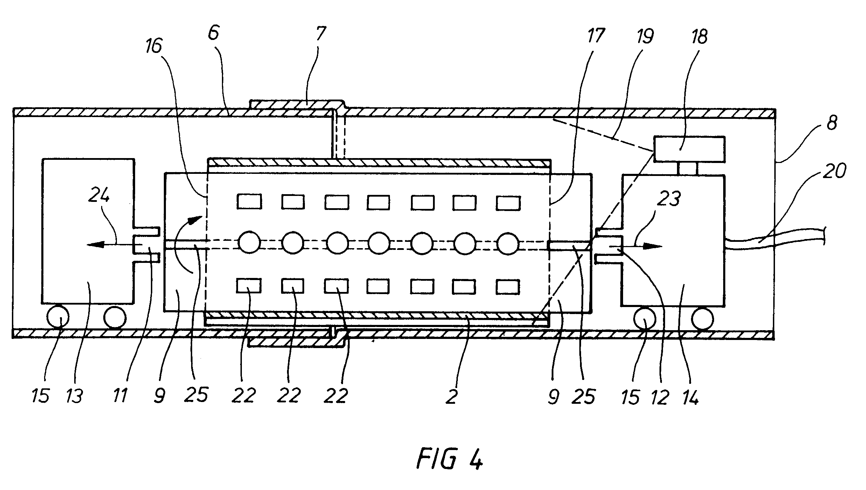

Das Wickelrohr nach Figur 2 oder Figur 6 wird mit einer Vorrichtung verarbeitet, wie sie in Figur 4 näher beschrieben wird.

Hierbei wird davon ausgegangen, daß ein Rohr 6 mit einer Muffe 7 versehen ist und daß im Bereich der Muffe 7 ein Schaden im Rohr aufgetreten ist.

Das Rohr 6 wird an einem Schacht geöffnet und über den geöffneten Schacht wird die gesamte Vorrichtung in das Rohr eingefahren; d.h., alle Vorrichtungsteile können zunächst über den Schacht in das Rohr eingebracht werden und dort an Ort und Stelle zusammengesetzt werden.

In einer anderen Ausführungsform ist es jedoch möglich, die gesamte Vorrichtung bereits schon außerhalb betriebsfertig zusammen zu setzen und über den Schacht in das Rohr 6 einzufahren.

Es wird hierbei angenommen, daß die gesamte Vorrichtung von der Stirnseite 8 des Rohres 6 her sich in Längsrichtung des Rohres 6 bewegt.

Die Vorrichtung besteht im wesentlichen aus dem Wickelrohr 2, welches in seinem Wickelzustand nach Figur 2 mit vermindertem Durchmesser im Rohr 6 so angeordnet ist, daß es leicht im Rohr verfahrbar ist.

Hierbei wird das Wickelrohr 2 von einer Blase 9 getragen, welche stirnseitig Stutzen 11,12 aufweist.

Jeder Stutzen 11,12 ist mit einem Antriebswagen 13,14 verbunden.

Der hintere Antriebswagen 14 dient beispielsweise dem Fahrantrieb und ist aktiv angetrieben, während der vordere Antriebswagen 13 lediglich der Abstützung des Stutzens 11 und damit der gesamten Vorrichtung dient.

Jeder Antriebswagen 13,14 rollt über entsprechende Räder 15 an der Sohle des Rohres 6 ab.

Zur Steuerung der Fahrbewegungen ist an mindestens einem der Antriebswagen 13,14 eine Fernseh-Kamera 18 angeordnet, deren Blickwinkel 19 die Vorrichtung mit dem Wickelrohr 2 und die schadhafte Muffe 7 einschließt.

Die Blase 9, welche durch das Wickelrohr 2 greift, ist länger als das Wickelrohr 2 selbst und ragt damit aus den Stirnseiten 16,17 des Wickelrohres 2 heraus.

Zur Abstützung sind die fluchtend einander gegenüberliegend angeordneten Stutzen 11,12 über eine Verbindungsachse 25 miteinander verbunden.

Der Stutzen 12 ist hierbei als Füll- und Entleerstutzen ausgebildet, und am hinteren Antriebswagen 14 setzt der Versorgungsstrang 20 an, der aus Kabeln und Zuführschläuchen besteht.

Die gesamte Einheit, bestehend aus der Blase, dem Wickelrohr 2 und den Antriebswagen 13,14 wird nun an den Ort des Einsatzes in Gegenüberstellung zur schadhaften Muffe 7 gefahren oder gezogen. Dies erfolgt unter Kontrolle der Kamera 18.

Sobald die gesamte Einheit ihre richtige Gegenüberstellung gegenüber der zu reparierenden Muffe 7 hat, wird über den Versorgungsstrang 20 Druckluft in den Stutzen 12 eingeblasen und die Blase 9 wird damit mit Luft gefüllt. Sie dehnt sich dadurch radial aus.

Durch die radiale Ausdehnung der Blase entfaltet sich das Wickelrohr 2, wobei die übereinander liegenden Wickelenden 32,33 in Umfangsrichtung aneinander entlanggleiten und das Wickelrohr 2 damit im Durchmesser stetig zunimmt, bis es unter der Kraft der sich aufblasenden Blase unter hoher Anpreßkraft an der Innenseite des zu reparierenden Rohres 6,7 anliegt.

Dadurch, daß der Druck der Blase praktisch beliebig erhöhbar ist und nur von den mechanischen Dimensionen der Blase 9 abhängt, ist es möglich, unter hoher Flächenpreßkraft das Wickelrohr 2 an die Innenseite des zu reparierenden Rohres 6,7 zur Anlage zu bringen.

Auch wenn das Rohr 6,7 im Bereich des Wickelrohres 2 leicht eingeknickt, abgesackt oder sonstwie geometrisch verformet sein sollte, spielt dies für die enge, fugen- und faltenlose Anlage des Wickelrohres 2 an der Innenseite des zu reparierenden Rohres 6,7 keine Rolle.

Variiert beispielsweise der Kanal im Bereich des Wickelrohres in seiner Länge, dann faltet sich das Wickelrohr beispielsweise an seiner einen Stirnseite 16 stärker auf als beispielsweise an der anderen Stirnseite 17, weil die Blase 9 kraft- und formschlüssig den gesamten Kanalquerschnitt ausfüllt und damit das Wickelrohr entsprechend dem ausgefüllten Kanalquerschnitt mitnimmt und entsprechend auffaltet.

Der gleiche Effekt wird auch bei seitlichen Abknickungen erreicht.

Sobald also das Wickelrohr 2 seine enge formschlüssige und unter hoher Anpreßkraft der Blase stehende Anpreßung an die Innenseite des zu reparierenden Rohres 6,7 eingenommen hat, wird die Druckluftzufuhr über den Stutzen 12 gestoppt und es tritt nun eine Harzhärteinrichtung in Betrieb, die in zwei verschiedenen Ausführungen möglich ist.

Im Ausführungsbeispiel der Figur 4 ist gezeigt, daß das Harz, mit dem das Wickelrohr 2 getränkt ist, ein UV-härtbares Harz ist.

Zur Aushärtung sind demzufogle UV-Strahler notwendig.

Erfindungsgemäß ist die gesamte Lichthärteanlage im Innenraum der Blase angeordnet, und auf der Verbindungsachse 25 befestigt. Diese Strahleranordnung besteht gemäß Figur 5 aus einen gegenseitigen Abstand voneinander einnehmenden Strahlerkränzen 22, wobei jeder Strahlerkranz mehrere gleichmäßig am Umfang verteilte Lampen 30 aufweist, wobei jede Lampe bevorzugt ein kugelförmig abgestrahltes Strahlerlicht 27 erzeugt.

Damit wird ein schattenloses Auftreten des UV-Lichtes auf die Innenseite der Blase 9 gewährleistet.

Die Blase ist lichtdurchlässig, mindestens jedoch UV-lichtdurchlässig.

Die UV-Strahler dringen daher durch die Blase 9 hindurch und gelangen in das Wickelrohr 2, wo das Harz aushärtet.

Es kann hierbei vorgesehen sein, daß die gesamte Strahleranordnung drehbar auf der Verbindungsachse 25 befestigt ist oder die Verbindungsachse 25 selbst drehend angetrieben ist und somit die Strahler 22 mitnimmt.

Im Falle, daß statt einer Lichthärtanordnung eine Wärmehärtanordnung vorgesehen ist, ist es in einer weiteren Ausführungsform vorgesehen anstatt der UV-Lampen entsprechende Wärmestrahler zu verwenden.

Um eine Beschädigung der Blase durch zu hohe Hitzeeinwirkung zu vermeiden wird dann über den Stutzen 12 ein Lufteinlaß 23 freigegeben, mit dem ein Kühlluftstrom in die Blase eingeführt, der am Luftauslaß 24 im Bereich des Stutzens 11 wieder entnommen wird.

Dadurch wird die Blase 9 mit Kühlluft gespült.

Mit dem beschriebenen Verfahren und mit einem mit dem Verfahren verwendeten Wickelrohr wird also erstmals eine fugenlose, faltenfreie, direkte Anlage eines Rohres an der Innenseite eines zu reparierenden Kanalrohres erreicht.

Dank des Ausfaltvermögens des beschriebenen Wickelrohres werden damit auch geometrische Verformungen im Bereich des zu sanierenden Kanalabschnittes sicher beherrscht. Es wird stets eine glatte faltenfreie und über den gesamten Umfang und die Länge des Wickelrohres sich erstreckende Anlage an der Innenseite des zu sanierenden Kanalrohres erreicht.

## Patentansprüche

1. Vorrichtung zum Sanieren von Abflußrohren mit einem Rohr (2) aus biegsamen Material, das mit einem aushärtbaren Harz getränkt ist und das gewickelt und mit einer Überlappung (3) des Rohrmaterials in ein zu sanierendes Abflußrohr (1) eingeführt werden kann und in dem sich eine Blase (9,10,) befindet, die aufgeblasen werden kann, so daß das Rohr (2) seinen Durchmesser unter Verkleinerung der Überlappung (3) vergrößert, bis es an der Innenwand des Abflußrohres (1) anliegt, sowie mit einer Einrichtung (22) zum Aushärten des Harzes, **dadurch gekennzeichnet**, daß an den Stirnseiten des Rohres (2) Fahr- und Antriebseinheiten (13,14) vorgesehen sind, die mittels Haltestutzen (11,12) die lichtdurchlässige wenigstens aber UV-lichtdurchlässige Blase und eine axial durch das Rohr (2) und die Blase hindurch gehende Stange (25) tragen, die die Einrichtung (22) zum Aushärten des Harzes trägt, die als Wärmestrahler oder Lampen ausgebildet ist.

2. Vorrichtung nach Anspruch 1, **dadurch gekennzeichnet**, daß mindestens auf dem einen der Fahrwagen der Fahr- und Antriebseinheit (13,14) eine Fernsehkamera (18) montiert ist.

3. Vorrichtung nach Anspruch 1 oder 2, **dadurch gekennzeichnet**, daß die Lichteinheit aus voneinander beabstandeten Strahlenkränzen (22) besteht, wobei ein Strahlenkranz (22) aus mehreren gleichmäßig am Umfang verteilt angeordneten UV-Lampen besteht.

4. Vorrichtung nach Anspruch 1 oder 2, **dadurch gekennzeichnet**, daß die Wärmeeinheit aus im Innenraum der Blase (9) auf der Verbindungsachse (25) angeordneten Heizstrahlern besteht.

## Claims

1. A device for the reconstruction of waste pipes with a pipe (2) of flexible material, which is impregnated with a resin which is able to be hardened and which, wound and with an overlap (3) of the pipe material, can be introduced into a waste pipe (1) which is to be reconstructed and in which there is situated a bubble (9,10) which can be inflated, so that the pipe (2) increases its diameter, with reduction of the overlap (3), until it lies against the inner wall of the waste pipe (1), and also with an arrangement (22) for hardening the resin, characterised in that on the end faces of the pipe (2) travelling and drive units (13,14) are provided, which carry by means of holding connections (11,12) the bubble, which is permeable to light but at least permeable to UV light, and a rod (25) passing axially through the pipe (2) and the bubble, which carries the arrangement (22) for hardening the resin, which is constructed as heat emitters or lamps.

2. A device according to Claim 1, characterised in that a television camera (18) is mounted at least on one of the travelling carriages of the travelling and drive unit (13,14).

3. A device according to Claim 1 or 2, characterised in that the light unit consists of ray rings (22) arranged spaced apart from each other, in which one ray ring (22) consists of a plurality of UV lamps arranged uniformly distributed on the circumference.

4. A device according to Claim 1 or 2, characterised in that the thermal unit consists of heat emitters arranged on the connection axis (25) in the interior of the bubble (9).

## Revendications

1. Dispositif pour rénover des tuyaux d'écoulement, comprenant un tuyau (2) en matériau souple qui est imprégné d'une résine durcissable et qui peut être introduit, enroulé et avec un chevauchement (3) du matériau du tuyau, dans un tuyau d'écoulement à rénover (1), et dans lequel se trouve une bulle (9, 10) qui peut être gonflée, de sorte que le tuyau (2) augmente son diamètre moyennant une diminution du chevauchement (3) jusqu'à ce qu'il soit appliqué contre la paroi intérieure du tuyau d'écoulement (1), et comprenant un appareillage (22) pour durcir la résine, caractérisé en ce qu'il est prévu, au niveau des faces frontales du tuyau (2), des unités de déplacement et d'entraînement (13, 14) qui portent, à l'aide de tubulures de support (11, 12), la bulle laissant passer la lumière mais au moins la lumière UV, et une barre (25) traversant axialement le tuyau (2) et la bulle et portant elle-même l'appareillage (22) pour durcir la résine, lequel est conçu sous la forme d'un radiateur thermique ou de lampes.

2. Dispositif selon la revendication 1, caractérisé en ce qu'une caméra de télévision (18) est montée sur l'un au moins des chariots de l'unité de déplacement et d'entraînement (13, 14).

3. Dispositif selon la revendication 1 ou 2, caractérisé en ce que l'unité lumineuse se compose de couronnes de rayonnement (22) espacées les unes des autres, une couronne de rayonnement (22) se composant elle-même de plusieurs lampes UV réparties régulièrement sur la circonférence.

4. Dispositif selon la revendication 1 ou 2, caractérisé en ce que l'unité thermique se compose de radiateurs chauffants disposés à l'intérieur de la bulle (9), sur l'axe de liaison (25).
